# EUROPÄISCHE PATENTSCHRIFT

(11) **EP 3 708 295 B1**
(45) Veröffentlichungstag und Bekanntmachung des Hinweises auf die Patenterteilung: **14.07.2021**
(21) Anmeldenummer: 19163207.4
(22) Anmeldetag: 15.03.2019
(51) Int. Cl.: B23Q 1/62, B23Q 11/00

(54) **WERKZEUGMASCHINE MIT OPTIMIERTER ORIENTIERUNG VON SCHWINGUNGSDÄMPFERN**
MACHINE TOOL WITH OPTIMISED ORIENTATION OF VIBRATION DAMPERS
MACHINE-OUTIL À ORIENTATION OPTIMISÉE D'AMORTISSEURS DE VIBRATIONS

(43) Veröffentlichungstag der Anmeldung: 16.09.2020
(73) Patentinhaber: Siemens Aktiengesellschaft, 80333 München (DE)
(72) Erfinder: Bretschneider, Jochen, 73732 Esslingen (DE); Ladra, Uwe, 91056 Erlangen (DE); Schäfers, Elmar, 90763 Fürth (DE); Schür, Torsten, 91058 Erlangen (DE)

(56) Entgegenhaltungen:
- EP-A1- 3 017 911
- EP-A2- 1 001 184
- JP-A- 2015 016 518

## Beschreibung

Die vorliegende Erfindung geht aus von einer Werkzeugmaschine,
- wobei die Werkzeugmaschine zumindest ein erstes und ein zweites Maschinenelement aufweist,
- wobei das erste Maschinenelement in einer Führung des zweiten Maschinenelements geführt wird und mittels eines Antriebs der Werkzeugmaschine in der Führung des zweiten Maschinenelements lagegeregelt in einer Verfahrrichtung verfahrbar ist,
- wobei das erste Maschinenelement eine erste und eine zweite Seitenfläche aufweist,
- wobei die erste und die zweite Seitenfläche parallel zur Verfahrrichtung verlaufen und orthogonal zueinander orientiert sind,
- wobei die Werkzeugmaschine einen ersten und einen zweiten Schwingungsdämpfer aufweist, mittels derer jeweils eine in einer jeweiligen Schwingungsrichtung verlaufende Schwingung des ersten Maschinenelements dämpfbar ist,
- wobei die Schwingungsrichtungen orthogonal zur Verfahrrichtung orientiert sind.

Eine derartige Werkzeugmaschine ist beispielsweise aus der EP 3 017 911 B1 bekannt.

Bei der bekannten Werkzeugmaschine sind die beiden Schwingungsdämpfer parallel zu den beiden Seitenflächen orientiert. Diese - scheinbar völlig natürliche - Art der Orientierung ist jedoch nicht für alle Fälle von Vorteil. Insbesondere kann es geschehen, dass bestimmte Schwingungen in Richtungen orientiert sind, die nicht parallel zu den beiden Seitenflächen orientiert sind. In diesem Fall führt die bekannte Vorgehensweise nicht stets zu guten Ergebnissen.

Die Aufgabe der vorliegenden Erfindung besteht darin, eine Werkzeugmaschine der eingangs genannten Art derart auszugestalten, dass Schwingungen gut dämpfbar sind, die nicht parallel zu den beiden Seitenflächen orientiert sind.

Die Aufgabe wird durch eine Werkzeugmaschine mit den Merkmalen des Anspruchs 1 gelöst. Vorteilhafte Ausgestaltungen der Werkzeugmaschine sind Gegenstand der abhängigen Ansprüche 2 bis 8.

Erfindungsgemäß wird eine Werkzeugmaschine der eingangs genannten Art dadurch ausgestaltet,
- dass der erste Schwingungsdämpfer derart orientiert ist, dass die Schwingungsrichtung der mittels des ersten Schwingungsdämpfers alleine dämpfbaren Schwingung weder parallel zur ersten noch parallel zur zweiten Seitenfläche orientiert ist, und/oder
- dass der zweite Schwingungsdämpfer derart orientiert ist, dass die Schwingungsrichtung der mittels des zweiten Schwingungsdämpfers alleine dämpfbaren Schwingung weder parallel zur ersten noch parallel zur zweiten Seitenfläche orientiert ist.

Je nach Lage des Einzelfalls kann es sinnvoll sein, dass einer der beiden Schwingungsdämpfer parallel zur ersten oder parallel zur zweiten Seitenfläche orientiert ist. Es kann jedoch auch sinnvoll sein, dass beide Schwingungsdämpfer weder parallel zur ersten noch parallel zur zweiten Seitenfläche orientiert sind. In diesem Fall kann es von Vorteil sein, wenn die Schwingungsrichtung der mittels des ersten Schwingungsdämpfers alleine dämpfbaren Schwingung und die Schwingungsrichtung der mittels des zweiten Schwingungsdämpfers alleine dämpfbaren Schwingung orthogonal zueinander orientiert sind. Insbesondere ergibt sich dadurch eine Entkopplung der beiden Schwingungsdämpfer voneinander.

Der erste und der zweite Schwingungsdämpfer sind vorzugsweise als aktive Schwingungsdämpfer ausgebildet. Eine aktive Schwingungsdämpfung führt gegenüber einer passiven Schwingungsdämpfung zu einem überlegenen Dämpfungsverhalten.

Es ist möglich, dass der erste und der zweite Schwingungsdämpfer an dem ersten Maschinenelement angeordnet sind. Besonders bevorzugt ist jedoch,
- dass das erste Maschinenelement einen Bearbeitungskopf umfasst, der eine Spindel trägt, mittels derer ein Werkzeug der Werkzeugmaschine um eine Rotationsachse rotiert wird,
- dass zwischen dem ersten Maschinenelement und dem Bearbeitungskopf oder neben dem Bearbeitungskopf ein Zusatzelement angeordnet ist und
- dass der erste und der zweite Schwingungsdämpfer an oder auf dem Zusatzelement angeordnet sind.

Diese Ausgestaltung bietet verschiedene Vorteile.

So ist es beispielsweise möglich, dass das Zusatzelement mittels eines weiteren Antriebs um eine zur Verfahrrichtung parallele erste Drehachse lagegeregelt drehbar ist. Dadurch können die Orientierungen der beiden Schwingungsdämpfer nach Bedarf eingestellt werden.

Von Vorteil kann diese Ausgestaltung insbesondere dann sein, wenn eine Rotationsachse der Spindel mittels eines weiteren Antriebs um eine zur Verfahrrichtung parallele zweite Drehachse lagegeregelt drehbar ist.

Oftmals weist der Bearbeitungskopf eine erste Handhabe auf, mittels derer der Bearbeitungskopf automatisiert von dem Zusatzelement lösbar ist. In diesem Fall besteht ein weiterer Vorteil in einer Ausgestaltung, bei welcher
- das Zusatzelement eine zweite Handhabe aufweist, mittels derer das Zusatzelement automatisiert von dem ersten Maschinenelement lösbar ist, und
- der Bearbeitungskopf nach dem Lösen des Zusatzelements von dem ersten Maschinenelement automatisiert mit dem ersten Maschinenelement verbindbar ist.

Dadurch ist es möglich, die Werkzeugmaschine nach Bedarf mit den beiden Schwingungsdämpfern oder ohne die beiden Schwingungsdämpfer zu betreiben. Insbesondere ist es möglich, dass nur in wenigen Anwendungsfällen Schwingungen auftreten. Bei einem derartigen Sachverhalt kann die Werkzeugmaschine über einen Großteil ihrer Betriebszeit ohne das Zusatzelement und damit ohne die beiden Schwingungsdämpfer betrieben werden. Nur in den wenigen Fällen, in denen ein Rattern auftritt, wird das Zusatzelement mit eingebaut.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine und deren Steuereinrichtung,
- FIG 2: einen Schnitt längs einer Linie F-F in FIG 1,
- FIG 3: eine zu FIG 2 alternative Ausgestaltung und
- FIG 4: einen Stößel, einen Bearbeitungskopf und ein Zusatzelement.

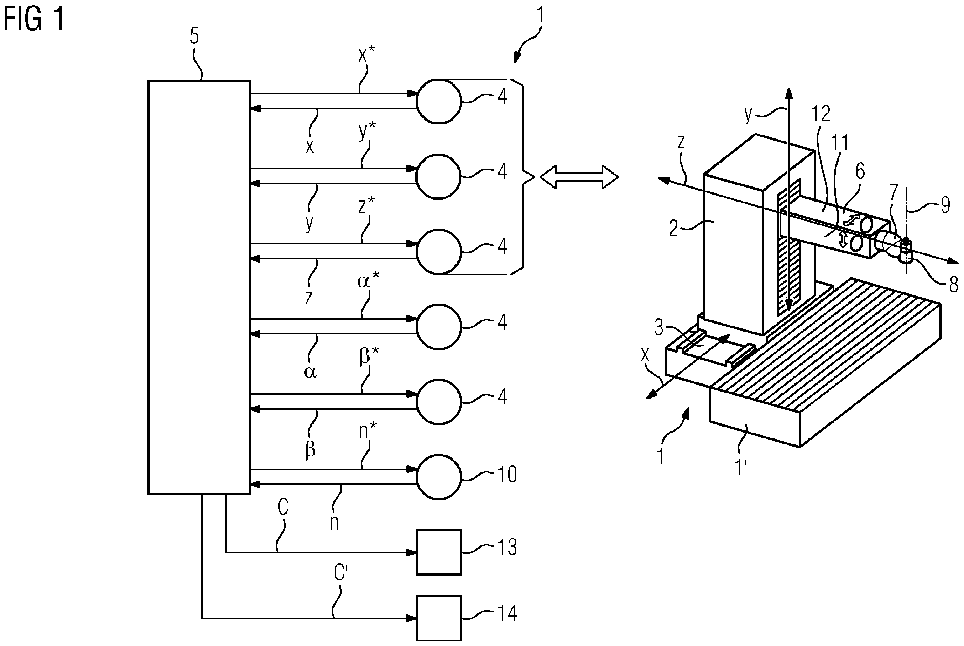

Gemäß FIG 1 weist eine Werkzeugmaschine mehrere Maschinenelemente auf. Beispielsweise weist die Werkzeugmaschine als Maschinenelement einen Grundkörper 1 auf. Auf oder an dem Grundkörper 1 befindet sich als weiteres Maschinenelement ein Werkstücktisch 1', an dem ein nicht dargestelltes Werkstück befestigt werden kann. Eine Säule 2 bildet ein weiteres Maschinenelement. Die Säule 2 ist in einer Führung 3 des Grundkörpers 1 geführt und mittels eines Antriebs 4 in einer mit x bezeichneten Richtung lagegeregelt verfahrbar. Eine Steuereinrichtung 5 gibt dem entsprechenden Antrieb 4 zu diesem Zweck einen entsprechenden Lagesollwert x* vor.

Innerhalb der Säule 2 kann eine weitere Führung angeordnet sein. Diese Führung ist in den FIG nicht dargestellt, kann jedoch vom Ansatz her gleichartig zur Führung 3 sein. Sie wird nachstehend als äußere Führung bezeichnet. Diese Bezeichnung dient der sprachlichen Unterscheidung von einer weiteren Führung, die als innere Führung bezeichnet werden wird.

Mittels eines weiteren Antriebs 4 kann eine weitere Führung - nämlich die innere Führung - in der äußeren Führung in einer mit y bezeichneten Richtung lagegeregelt verfahren werden. Die Steuereinrichtung 5 gibt dem entsprechenden Antrieb 4 zu diesem Zweck einen entsprechenden Lagesollwert y* vor.

Die Werkzeugmaschine weist weiterhin einen Stößel 6 auf. Der Stößel 6 ist in der inneren Führung mittels eines weiteren Antriebs 4 in einer mit z bezeichneten Richtung lagegeregelt verfahrbar. Die Steuereinrichtung 5 gibt dem entsprechenden Antrieb 4 zu diesem Zweck einen entsprechenden Lagesollwert z* vor. Auch die innere Führung ist in den FIG nicht dargestellt, kann jedoch vom Ansatz her gleichartig zur Führung 3 sein.

Der Stößel 6 umfasst einen Bearbeitungskopf 7. Der Bearbeitungskopf 7 trägt eine Spindel 8, mittels derer ein Werkzeug der Werkzeugmaschine mit einer Drehzahl n um eine Rotationsachse 9 rotiert wird. Das Werkzeug selbst ist in den FIG nicht dargestellt. Zum Rotieren der Spindel 8 gibt die Steuereinrichtung 5 einem Spindelantrieb 10 einen entsprechenden Drehzahlsollwert n* vor.

Der Stößel 6 ist ein erstes Maschinenelement im Sinne der vorliegenden Erfindung. Die Säule 2 - genauer: die innere Führung der Säule 2 - ist ein zweites Maschinenelement im Sinne der vorliegenden Erfindung. Die z-Richtung ist die Verfahrrichtung im Sinne der vorliegenden Erfindung.

Der Stößel 6 - also das erste Maschinenelement - weist eine erste und eine zweite Seitenfläche 11, 12 auf. Die Seitenflächen 11, 12 verlaufen parallel zur Verfahrrichtung z und sind orthogonal zueinander orientiert. Insbesondere ist eine der beiden Seitenflächen 11, 12 zugleich auch parallel zur Richtung x orientiert, die andere parallel zur Richtung y.

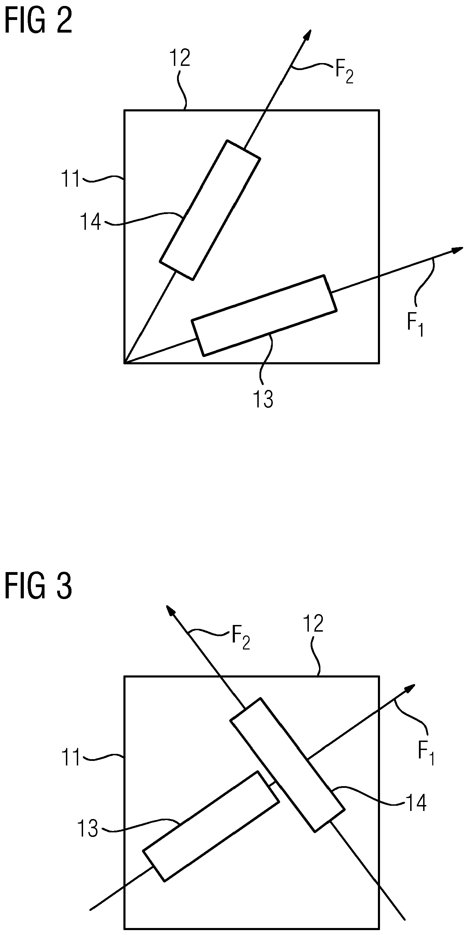

Entsprechend der Darstellung in FIG 2 weist die Werkzeugmaschine einen ersten Schwingungsdämpfer 13 und einen zweiten Schwingungsdämpfer 14 auf. Mittels des ersten Schwingungsdämpfers 13 ist eine Schwingung des ersten Maschinenelements 6 dämpfbar, die in einer in FIG 2 mit F1 bezeichneten Richtung verläuft. In analoger Weise ist mittels des zweiten Schwingungsdämpfers 14 eine Schwingung des ersten Maschinenelements 6 dämpfbar, die in einer in FIG 2 mit F2 bezeichneten Richtung verläuft. Die Richtungen F1, F2, in denen die Schwingungsdämpfer 13, 14 wirken, - nachfolgend als erste und zweite Schwingungsrichtung F1, F2 bezeichnet - sind entsprechend der Darstellung in FIG 2 orthogonal zur Verfahrrichtung z orientiert. Ersichtlich ist der erste Schwingungsdämpfer 13 derart orientiert, dass seine Schwingungsrichtung F1 weder parallel zur ersten noch parallel zur zweiten Seitenfläche 11, 12 orientiert ist. In analoger Weise ist ersichtlich auch der zweite Schwingungsdämpfer 14 derart orientiert, dass seine Schwingungsrichtung F2 weder parallel zur ersten noch parallel zur zweiten Seitenfläche 11, 12 orientiert ist. Dennoch ist eine entsprechende Ansteuerung mittels einer Fachleuten allgemein bekannten Koordinatentransformation ohne weiteres ermittelbar.

Gemäß der Darstellung in FIG 2 sind die Schwingungsdämpfer 13, 14 derart orientiert, dass ihre Schwingungsrichtungen F1, F2 einen spitzen Winkel miteinander bilden. Es ist entsprechend der Darstellung in FIG 3 jedoch ebenso möglich, dass die Schwingungsrichtungen F1, F2 orthogonal zueinander orientiert sind.

Die beiden Schwingungsdämpfer 13, 14 können als passive Schwingungsdämpfer ausgebildet sein. Vorzugsweise aber sind die beiden Schwingungsdämpfer 13, 14 als aktive Schwingungsdämpfer ausgebildet. Dies ist in FIG 1 dadurch ersichtlich, dass beiden Schwingungsdämpfern 13, 14 von der Steuereinrichtung 5 entsprechende Steuersignale C, C' zugeführt werden, die Schwingungsdämpfer 13, 14 also von der Steuereinrichtung 5 aktiv angesteuert werden. Eine erforderliche Sensorik zur Erfassung einer auftretenden Schwingung ist in diesem Fall vorzugsweise entweder parallel zu den Richtungen x, y, z oder unter einem Winkel zu diesen Richtungen angebracht. Insbesondere ist es möglich, die auftretende Schwingung in den Schwingungsrichtungen F1, F2 zu erfassen.

In der bisher erläuterten Ausgestaltung gemäß den FIG 1 bis 3 sind die beiden Schwingungsdämpfer 13, 14 an dem Stößel 6 angeordnet, also an dem ersten Maschinenelement. Es ist jedoch alternativ ebenso möglich, dass die beiden Schwingungsdämpfer 13, 14 Bestandteile des Bearbeitungskopfes 7 sind.

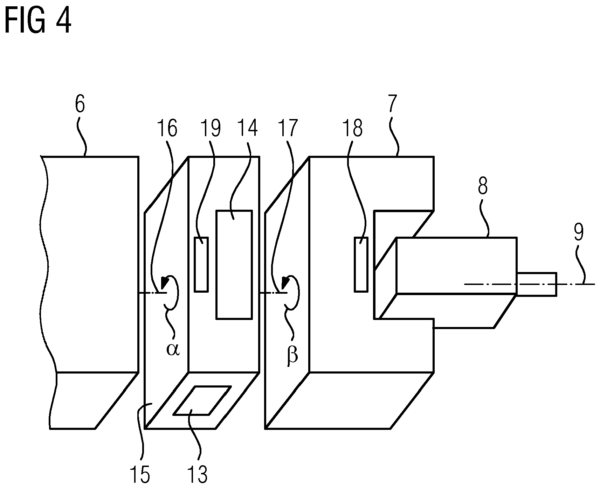

In einer besonders bevorzugten Ausgestaltung ist entsprechend der Darstellung in FIG 4 zwischen dem ersten Maschinenelement 6 und dem Bearbeitungskopf 7 oder neben dem Bearbeitungskopf 7 - zumindest temporär ein Zusatzelement 15 angeordnet. In diesem Fall können der erste und der zweite Schwingungsdämpfer 13, 14 an oder auf dem Zusatzelement 15 angeordnet sein.

Vorzugsweise ist das Zusatzelement 15 mittels eines weiteren Antriebs 4 um eine zur Verfahrrichtung z parallele erste Drehachse 16 lagegeregelt drehbar. Die Steuereinrichtung 5 gibt dem entsprechenden Antrieb 4 zu diesem Zweck einen entsprechenden ersten Winkelsollwert α* vor. Dadurch kann - beispielsweise - der erste Schwingungsdämpfer 13 stärker ausgelegt werden als der zweite Schwingungsdämpfer 14, so dass der erste Schwingungsdämpfer 13 eine auftretende Schwingung in stärkerem Umfang als der zweite Schwingungsdämpfer 14 dämpfen kann. Das Drehen des Zusatzelements 15 um die Drehachse 16 kann in diesem Fall derart bestimmt werden, dass die erste Schwingungsrichtung F1 parallel oder nahezu parallel zu der Richtung orientiert ist, in welcher das erste Maschinenelement 6 tatsächlich schwingt. Der zweite Schwingungsdämpfer 14 muss in diesem Fall lediglich noch einen geringfügigen Rest der Schwingung des ersten Maschinenelements 6 kompensieren, der beispielsweise durch eine Fehlanordnung beim Verdrehen des Zusatzelements 15 aufgetreten ist. Die Richtung, in welcher das erste Maschinenelement 6 tatsächlich schwingt, kann beispielsweise durch die Richtung der Schnittkraft einer spanenden Bearbeitung oder der Aktivkraft einer Fräsbearbeitung bestimmt sein. Die Orientierung des Zusatzelements 15 kann nach Bedarf vor der Inbetriebnahme der Werkzeugmaschine und auch während des laufenden Betriebs erfolgen, also während der spanenden Bearbeitung eines Werkstücks.

Es ist möglich, dass mit dem Verdrehen des Zusatzelements 15 zugleich auch die Rotationsachse 9 der Spindel 8 mit verdreht wird. Alternativ ist es möglich, dass die Rotationsachse 9 der Spindel 8 mittels eines weiteren Antriebs 4 lagegeregelt um eine zur Verfahrrichtung z parallele zweite Drehachse 17 drehbar ist. Die Steuereinrichtung 5 gibt in diesem Fall dem entsprechenden Antrieb 4 zu diesem Zweck einen entsprechenden zweiten Winkelsollwert β* vor.

Vorzugsweise weist der Bearbeitungskopf 7 entsprechend der Darstellung in FIG 4 eine erste Handhabe 18 auf. Mittels der ersten Handhabe 18 ist der Bearbeitungskopf 7 automatisiert von dem Zusatzelement 15 lösbar und somit auch abnehmbar. In analoger Weise weist das Zusatzelement 15 eine zweite Handhabe 19 auf. Mittels der zweiten Handhabe 19 ist das Zusatzelement 15 automatisiert von dem ersten Maschinenelement 6 lösbar und somit auch abnehmbar. Nach dem Lösen und Abnehmen des Zusatzelements 15 von dem ersten Maschinenelement 6 kann sodann ebenfalls automatisiert der Bearbeitungskopf 7 wieder mit dem ersten Maschinenelement 6 verbunden werden. Es ist also ein Betrieb der Werkzeugmaschine sowohl mit dem Zusatzelement 15 als auch ohne das Zusatzelements 15 möglich. Zusammengefasst betrifft die vorliegende Erfindung somit folgenden Sachverhalt:
Eine Werkzeugmaschine weist zumindest ein erstes und ein zweites Maschinenelement 6, 2 auf. Das erste Maschinenelement 6 wird in einer Führung des zweiten Maschinenelements 2 geführt und ist mittels eines Antriebs 4 der Werkzeugmaschine in der Führung des zweiten Maschinenelements 2 lagegeregelt in einer Verfahrrichtung z verfahrbar. Das erste Maschinenelement 6 weist eine erste und eine zweite Seitenfläche 11, 12, die parallel zur Verfahrrichtung z verlaufen und orthogonal zueinander orientiert sind. Die Werkzeugmaschine weist einen ersten und einen zweiten Schwingungsdämpfer 13, 14 auf, mittels derer jeweils eine in einer jeweiligen Schwingungsrichtung F1, F2 verlaufende Schwingung des ersten Maschinenelements 6 dämpfbar ist. Die Schwingungsrichtungen F1, F2 sind orthogonal zur Verfahrrichtung z orientiert. Der erste Schwingungsdämpfer 13 und/oder der zweite Schwingungsdämpfer 14 sind derart orientiert, dass die Schwingungsrichtung F1, F2 der mittels des ersten bzw. zweiten Schwingungsdämpfers 13, 14 alleine dämpfbaren Schwingung weder parallel zur ersten noch parallel zur zweiten Seitenfläche 11, 12 orientiert ist.

Die vorliegende Erfindung weist viele Vorteile auf. Insbesondere ist es möglich, die Orientierung der Schwingungsrichtung F1, F2 der Schwingungsdämpfer 13, 14 nach Bedarf auszurichten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Werkzeugmaschine,
- wobei die Werkzeugmaschine zumindest ein erstes und ein zweites Maschinenelement (6, 2) aufweist,
- wobei das erste Maschinenelement (6) in einer Führung des zweiten Maschinenelements (2) geführt wird und mittels eines Antriebs (4) der Werkzeugmaschine in der Führung des zweiten Maschinenelements (2) lagegeregelt in einer Verfahrrichtung (z) verfahrbar ist,
- wobei das erste Maschinenelement (6) eine erste und eine zweite Seitenfläche (11, 12) aufweist,
- wobei die erste und die zweite Seitenfläche (11, 12) parallel zur Verfahrrichtung (z) verlaufen und orthogonal zueinander orientiert sind,
- wobei die Werkzeugmaschine einen ersten und einen zweiten Schwingungsdämpfer (13, 14) aufweist, mittels derer jeweils eine in einer jeweiligen Schwingungsrichtung (F1, F2) verlaufende Schwingung des ersten Maschinenelements (6) dämpfbar ist,
- wobei die Schwingungsrichtungen (F1, F2) orthogonal zur Verfahrrichtung (z) orientiert sind,
**dadurch gekennzeichnet ,**
- **dass** der erste Schwingungsdämpfer (13) derart orientiert ist, dass die Schwingungsrichtung (F1) der mittels des ersten Schwingungsdämpfers (13) alleine dämpfbaren Schwingung weder parallel zur ersten noch parallel zur zweiten Seitenfläche (11, 12) orientiert ist, und/oder
- **dass** der zweite Schwingungsdämpfer (14) derart orientiert ist, dass die Schwingungsrichtung (F2) der mittels des zweiten Schwingungsdämpfers (14) alleine dämpfbaren Schwingung weder parallel zur ersten noch parallel zur zweiten Seitenfläche (11, 12) orientiert ist.

2. Werkzeugmaschine nach Anspruch 1,
**dadurch gekennzeichnet ,**
**dass** die Schwingungsrichtung (F1) der mittels des ersten Schwingungsdämpfers (13) alleine dämpfbaren Schwingung und die Schwingungsrichtung (F2) der mittels des zweiten Schwingungsdämpfers (14) alleine dämpfbaren Schwingung orthogonal zueinander orientiert sind.

3. Werkzeugmaschine nach Anspruch 2,
**dadurch gekennzeichnet ,**
**dass** der erste und der zweite Schwingungsdämpfer (13, 14) als aktive Schwingungsdämpfer ausgebildet sind.

4. Werkzeugmaschine nach Anspruch 1 oder 2,
**dadurch gekennzeichnet ,**
**dass** der erste und der zweite Schwingungsdämpfer (13, 14) an dem ersten Maschinenelement (6) angeordnet sind.

5. Werkzeugmaschine nach Anspruch 1 oder 2,
**dadurch gekennzeichnet ,**
- **dass** das erste Maschinenelement (6) einen Bearbeitungskopf (7) umfasst, der eine Spindel (8) trägt, mittels derer ein Werkzeug der Werkzeugmaschine um eine Rotationsachse (9) rotiert wird,
- **dass** zwischen dem ersten Maschinenelement (6) und dem Bearbeitungskopf (7) oder neben dem Bearbeitungskopf (7) ein Zusatzelement (15) angeordnet ist und
- **dass** der erste und der zweite Schwingungsdämpfer (13, 14) an oder auf dem Zusatzelement (15) angeordnet sind.

6. Werkzeugmaschine nach Anspruch 5,
**dadurch gekennzeichnet ,**
**dass** das Zusatzelement (15) mittels eines weiteren Antriebs (4) um eine zur Verfahrrichtung (z) parallele erste Drehachse (16) lagegeregelt drehbar ist.

7. Werkzeugmaschine nach Anspruch 5 oder 6,
**dadurch gekennzeichnet ,**
**dass** eine Rotationsachse der Spindel (8) mittels eines weiteren Antriebs (4) um eine zur Verfahrrichtung (z) parallele zweite Drehachse (17) lagegeregelt drehbar ist.

8. Werkzeugmaschine nach Anspruch 5, 6 oder 7,
**dadurch gekennzeichnet ,**
- **dass** der Bearbeitungskopf (7) eine erste Handhabe (18) aufweist, mittels derer der Bearbeitungskopf (7) automatisiert von dem Zusatzelement (15) lösbar ist,
- **dass** das Zusatzelement (15) eine zweite Handhabe (19) aufweist, mittels derer das Zusatzelement (15) automatisiert von dem ersten Maschinenelement (6) lösbar ist, und
- **dass** der Bearbeitungskopf (7) nach dem Lösen des Zusatzelements (15) von dem ersten Maschinenelement (6) automatisiert mit dem ersten Maschinenelement (6) verbindbar ist.

## Claims

1. Machine tool,
- wherein the machine tool has at least a first and a second machine element (6, 2),
- wherein the first machine element (6) is guided in a guideway of the second machine element (2) and can be traversed in a traversing direction (z) in a positionally controlled manner in the guideway of the second machine element (2) by means of a drive unit (4) of the machine tool,
- wherein the first machine element (6) has a first and a second side surface (11, 12),
- wherein the first and the second side surfaces (11, 12) run parallel to the traversing direction (z) and are oriented at a right angle to each other,
- wherein the machine tool has a first and a second vibration damper (13, 14), by means of which a vibration of the first machine element (6) running in a respective vibration direction (F1, F2) can be damped in each case,
- wherein the vibration directions (F1, F2) are oriented at a right angle to the traversing direction (z),
**characterised in that**
- the first vibration damper (13) is oriented such that the vibration direction (F1) of the sole vibration that can be damped by means of the first vibration damper (13) is oriented neither parallel to the first side face nor parallel to the second (11, 12), and/or
- the second vibration damper (14) is oriented such that the vibration direction (F2) of the sole vibration that can be damped by means of the second vibration damper (14) is oriented neither parallel to the first side face nor parallel to the second (11, 12).

2. Machine tool according to claim 1,
**characterised in that**
the vibration direction (F1) of the sole vibration that can be damped by means of the first vibration damper (13) and the vibration direction (F2) of the sole vibration that can be damped by means of the second vibration damper (14) are oriented at a right angle to each other.

3. Machine tool according to claim 2,
**characterised in that**
the first and the second vibration dampers (13, 14) are realised in the form of active vibration dampers.

4. Machine tool according to claim 1 or 2,
**characterised in that**
the first and the second vibration dampers (13, 14) are arranged on the first machine element (6).

5. Machine tool according to claim 1 or 2,
**characterised in that**
- the first machine element (6) comprises a processing head (7), which holds a spindle (8) by means of which a tool of the machine tool is rotated around an axis of rotation (9),
- an additional element (15) is arranged between the first machine element (6) and the processing head (7) or adjacent to the processing head (7), and
- the first and the second vibration dampers (13, 14) are arranged at or on the additional element (15).

6. Machine tool according to claim 5,
**characterised in that**
the additional element (15) can be swivelled in a positionally controlled manner around a first swivelling axis (16) parallel to the traversing direction (z) by means of a further drive unit (4).

7. Machine tool according to claim 5 or 6,
**characterised in that**
an axis of rotation of the spindle (8) can be swivelled in a positionally controlled manner around a second swivelling axis (17) parallel to the traversing direction (z) by means of a further drive unit (4).

8. Machine tool according to claim 5, 6 or 7,
**characterised in that**
- the processing head (7) has a first handle (18) by means of which the processing head (7) can be automatically detached from the additional element (15),
- the additional element (15) has a second handle (19) by means of which the additional element (15) can be automatically detached from the first machine element (6), and
- the processing head (7) can be automatically connected to the first machine element (6) following detachment of the additional element (15) from the first machine element (6).

## Revendications

1. Machine-outil,
- dans laquelle la machine-outil a au moins un premier et un deuxième élément (6, 2) de machine,
- dans laquelle le premier élément (6) de machine est guidé dans un guidage du deuxième élément (2) de machine et peut être déplacé d'une manière réglée en position dans une direction (z) de déplacement dans le guidage du deuxième élément (2) de machine au moyen d'un entraînement (4) de la machine-outil,
- dans laquelle le premier élément (6) de machine a une première et une deuxième surface (11, 12) latérale,
- dans laquelle la première et la deuxième surface (11, 12) latérale s'étendent parallèlement à la direction (z) de déplacement et sont orientées orthogonalement entre elles,
- dans laquelle la machine-outil a un premier et un deuxième amortisseurs (13, 14) de vibration, au moyen desquels respectivement une vibration du premier élément (6) de machine dans une direction (F1, F2) de vibration respective peut être amortie,
- dans laquelle les directions (F1, F2) de vibration sont orientées orthogonalement à la direction (z) de déplacement, **caractérisée en ce que**
- le premier amortisseur (13) de vibration est orienté de manière à ce que la direction (F1) de la vibration pouvant être amortie au moyen du seul premier amortisseur (13) de vibration ne soit orientée ni parallèlement à la première, ni parallèlement à la deuxième surface (11, 12) latérale, et/ou
- **en ce que** le deuxième amortisseur (14) de vibration est orienté de manière à ce que la direction (F2) de la vibration pouvant être amortie au moyen du seul deuxième amortisseur (14) de vibration ne soit ni parallèle à la première, ni parallèle à la deuxième surface (11, 12) latérale.

2. Machine-outil suivant la revendication 1,
**caractérisée en ce que**
la direction (F1) de la vibration pouvant être amortie au moyen du seul premier amortisseur (13) de vibration et la direction (F2) de la vibration qui doit être amortie au moyen du seul deuxième amortisseur (14) de vibration sont orientées en étant orthogonales entre elles.

3. Machine-outil suivant la revendication 2,
**caractérisée en ce que**
le premier et le deuxième amortisseurs (13, 14) de vibration sont constitués en amortisseurs de vibration actifs.

4. Machine-outil suivant la revendication 1 ou 2,
**caractérisée en ce que**
le premier et le deuxième amortisseurs (13, 14) de vibration sont montés sur le premier élément (6) de machine.

5. Machine-outil suivant la revendication 1 ou 2,
**caractérisée en ce que**
- **en ce que** le premier élément (6) de machine comprend une tête (7) d'usinage, qui porte une broche (8), au moyen de laquelle un outil de la machine-outil est mis en rotation autour d'un axe (9) de rotation,
- **en ce que** entre le premier élément (6) de machine et la tête (7) d'usinage ou à côté de la tête (7) d'usinage est disposé un élément (15) supplémentaire et
- **en ce que** le premier et le deuxième amortisseurs (13, 14) de vibration sont disposés à ou sur l'élément (15) supplémentaire.

6. Machine-outil suivant la revendication 5,
**caractérisée en ce que**
l'élément (15) supplémentaire peut, au moyen d'un autre entraînement (4), tourner d'une manière réglée en position autour d'un premier axe (16) de rotation parallèle à la direction (z) de déplacement.

7. Machine-outil suivant la revendication 5 ou 6,
**caractérisée en ce que**
un axe de rotation de la broche (8) peut, au moyen d'un autre entraînement (4), tourner d'une manière réglée en position autour d'un deuxième axe (17) de rotation parallèle à la direction (z) de déplacement.

8. Machine-outil suivant la revendication 5, 6 ou 7,
**caractérisée**
- **en ce que** la tête (7) d'usinage a une première poignée (18), au moyen de laquelle la tête (7) d'usinage peut être détachée d'une manière automatisée de l'élément (15) supplémentaire,
- **en ce que** l'élément (15) supplémentaire a une deuxième poignée (19), au moyen de laquelle l'élément (15) supplémentaire peut être détaché de manière automatisée du premier élément (6) de machine, et
- **en ce que** la tête (7) d'usinage peut, après le détachement de l'élément (15) supplémentaire du premier élément (6) de machine, être reliée de manière automatisée au premier élément (6) de machine.
